# EUROPEAN PATENT APPLICATION

(11) **EP 2 256 312 A1**
(43) Date of publication of application: **01.12.2010**
(21) Application number: 10160019.5
(22) Date of filing: 15.04.2010
(51) Int. Cl.: F01N 3/20

(54) **Exhaust gas purifying system**

(30) Priority: 18.05.2009 JP 2009119872
(71) Applicant: Kabushiki Kaisha Toyota Jidoshokki, Kariya-shi, Aichi 448-8671 (JP)
(72) Inventor: Yoshida, Koji, Kariya-shi Aichi 448-8671 (JP); KATO, Yoshifumi, Kariya-shi Aichi 448-8671 (JP)
(74) Representative: TBK-Patent

(57) **Abstract**

An exhaust gas purifying system includes an exhaust passage (2), an oxidation catalyst (3), a selective catalytic reduction catalyst (5), a urea water supply device (7), a first heating mechanism (8) and a controller (10). The exhaust gas discharged from an internal combustion engine (1) flows through the exhaust passage (2). The oxidation catalyst (3) for oxidizing nitrogen monoxide contained in the exhaust gas to nitrogen dioxide is disposed in the exhaust passage (2). The selective catalytic reduction catalyst (5) is disposed downstream of the oxidation catalyst (3). The urea water supply device (7) supplies urea water into the exhaust passage (2) at the upstream of the selective catalytic reduction catalyst (5). The first heating mechanism (8) heats the oxidation catalyst (3). The controller (10) controls the first heating mechanism (8) to adjust the temperature of the oxidation catalyst (3) such that molar ratio between nitrogen monoxide and nitrogen dioxide in the exhaust gas flowing into the selective catalytic reduction catalyst (5) become one to one.

## Description

### BACKGROUND OF THE INVENTION

The present invention relates to an exhaust gas purifying system, and more particularly to an exhaust gas purifying system including a urea selective catalytic reduction (SCR) system for purifying nitrogen oxides (NO_{X}) contained in exhaust gas discharged from a diesel engine.

The urea SCR system has been developed for reducing NO_{X} contained in exhaust gas discharged from the diesel engine. In the urea SCR system, a catalyst known as SCR catalyst is used for purifying by reacting NO_{X} with ammonia produced by hydrolysis of urea water to form nitrogen and water.

Purification efficiency of the SCR catalyst is maximized when the molar ratio between nitrogen monoxide (NO) and nitrogen dioxide (NO₂) is one to one. However, the content of NO in normal exhaust gas is usually greater than that of NO₂. In order to make the molar ratio between NO and NO₂ close to one to one, it has been practiced to provide an oxidation catalyst upstream of the SCR catalyst for oxidizing a part of NO to form NO₂.

Conversion of NO to NO₂ by the oxidation catalyst depends on the temperature of the oxidation catalyst. In the case when the temperature of the oxidation catalyst is relatively low, reducing power is greater than oxidizing power, so that molar ratio of NO contained in exhaust gas passed through the oxidation catalyst is increased.

An exhaust gas purifying system for increasing the molar ratio of NO₂ contained in exhaust gas passed through the oxidation catalyst by heating the oxidation catalyst with an electric heater is disclosed in Japanese Patent Application Publication No. 08-338229.

In an exhaust gas purifying system including a conventional urea SCR system, molar ratio of NO contained in exhaust gas flowing into the SCR catalyst is increased when the temperature of the oxidation catalyst is relatively low, for example at a cold start. Thus, purification efficiency of the SCR catalyst for NO_{X} is decreased.

Molar ratio between NO and NO₂ in exhaust gas is varied in accordance with the operating conditions of diesel engine such as an amount of fuel injection and engine speed. Thus, if the exhaust gas purifying system disclosed in the above Publication is applied to the conventional urea SCR system, increasing the molar ratio of NO₂ by heating the oxidation catalyst with the electric heater does not necessarily ensure that the molar ratio between NO and NO₂ contained in exhaust gas flowing into the SCR catalyst becomes one to one and that purification efficiency of the SCR catalyst is maximized.

The present invention is directed to providing an exhaust gas purifying system in which purification efficiency of a SCR catalyst can be maximized irrespective of the operating conditions of diesel engine.

### SUMMARY OF THE INVENTION

In accordance with the present invention, an exhaust gas purifying system includes an exhaust passage, an oxidation catalyst, a selective catalytic reduction catalyst, a urea water supply device, a first heating mechanism and a controller. The exhaust gas discharged from an internal combustion engine flows through the exhaust passage. The oxidation catalyst for oxidizing nitrogen monoxide contained in the exhaust gas to nitrogen dioxide is disposed in the exhaust passage. The selective catalytic reduction catalyst is disposed downstream of the oxidation catalyst. The urea water supply device supplies urea water into the exhaust passage at the upstream of the selective catalytic reduction catalyst. The first heating mechanism heats the oxidation catalyst. The controller controls the first heating mechanism to adjust the temperature of the oxidation catalyst such that the molar ratio between nitrogen monoxide and nitrogen dioxide in the exhaust gas flowing into the selective catalytic reduction catalyst become one to one.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic view showing an exhaust gas purifying system according to a first preferred embodiment of the present invention;
Fig. 2 is a diagram showing a temperature dependency of conversion of NO to NO₂ by oxidation catalyst in the exhaust gas purifying system of Fig. 1;
Fig. 3 is a data map stored in an electronic control unit (ECU) of the exhaust gas purifying system of Fig. 1; and

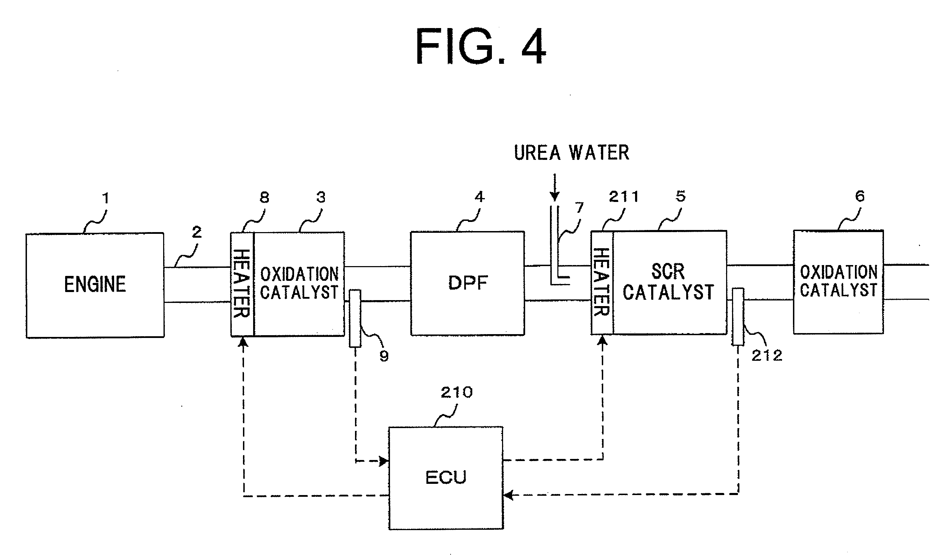

Fig. 4 is a schematic view showing an exhaust gas purifying system according to a second preferred embodiment of the present invention.

### DETAILED DESCRIPTION OF THE PREFERRED EMBODIMENTS

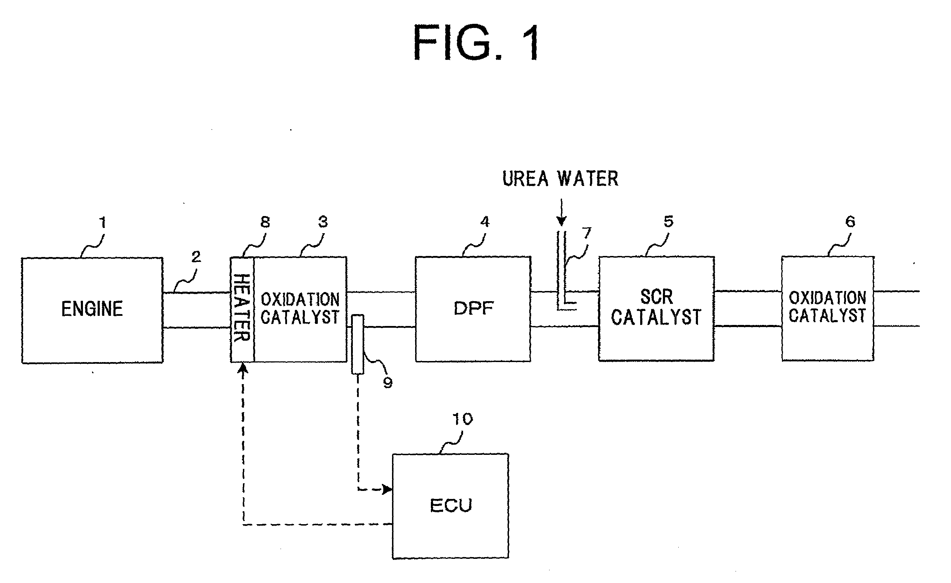

The following will describe an exhaust gas purifying system according to a first preferred embodiment of the present invention with reference to Figs. 1 through 3. Referring to Fig. 1 showing the exhaust gas purifying system according to the first preferred embodiment of the present invention, an oxidation catalyst 3 for oxidizing a part of NO contained in exhaust gas thereby to form NO₂ is disposed in an exhaust passage 2 through which exhaust gas discharged from a diesel engine 1 serving as an internal combustion engine flows. A diesel particulate filter (DPF) 4 for removing particulate matter (PM) contained in exhaust gas is disposed downstream of the oxidation catalyst 3. A selective catalytic reduction (SCR) catalyst 5 for reducing NO_{X} to form nitrogen and water by reacting NO_{X} with ammonia produced by hydrolysis of urea water is disposed downstream of the DPF 4. An oxidation catalyst 6 for oxidizing ammonia remaining in the SCR catalyst 5 without being reacted or consumed is disposed downstream of the SCR catalyst 5. A urea water supply nozzle 7 serving as a urea water supply device is disposed between the DPF 4 and the SCR catalyst 5 and connected to a urea water tank (not shown) for supplying urea water at the upstream of the SCR catalyst 5.

An electric heater 8 serving as a first heating mechanism that is operable to adjust the temperature for heating the oxidation catalyst 3 is arranged on the upstream end surface of the oxidation catalyst 3. A temperature sensor 9 is arranged at a position downstream of the oxidation catalyst 3. In the first preferred embodiment, the temperature detected by the temperature sensor 9 is considered as the temperature of the oxidation catalyst 3. The electric heater 8 and the temperature sensor 9 are electrically connected to an electric control unit (ECU) 10 or an engine control unit serving as a controller.

The following will describe the operation of the exhaust gas purifying system according to the first preferred embodiment of the present invention. Exhaust gas discharged from the diesel engine 1 into the exhaust passage 2 is firstly flowed into the oxidation catalyst 3 where a part of NO contained in exhaust gas is oxidized thereby to form NO₂. Then, the exhaust gas passed through the oxidation catalyst 3 is flowed into the DPF 4 where particulate matter (PM) contained in exhaust gas is deposited on the DPF 4, and the deposited PM is reacted with NO₂ contained in exhaust gas, thus being burned and removed. The exhaust gas passed through the DPF 4 is then flowed into the SCR catalyst 5.

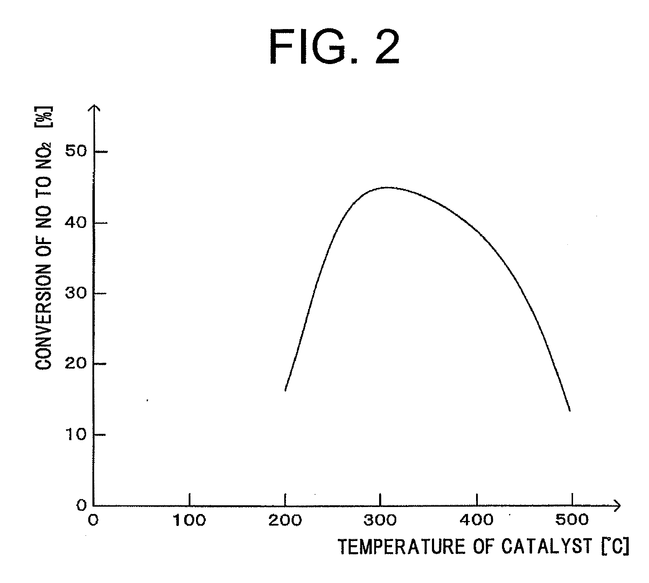

As described above, purification efficiency of the SCR catalyst 5 for NO_{X} becomes maximum when molar ratio between NO and NO₂ is one to one. Molar ratio between NO and NO₂ contained in exhaust gas discharged from the diesel engine 1 depends on an amount of fuel injection and engine speed of the diesel engine 1. Referring to Fig. 2, conversion of NO to NO₂ by the oxidation catalyst 3 depends on the temperature of the oxidation catalyst 3. Therefore, the ECU 10 controls the electric heater 8 to adjust the temperature of the oxidation catalyst 3 based on the data of an amount of fuel injection and engine speed of the diesel engine 1 such that the molar ratio between NO and NO₂ in exhaust gas flowing into the SCR catalyst 5 becomes one to one.

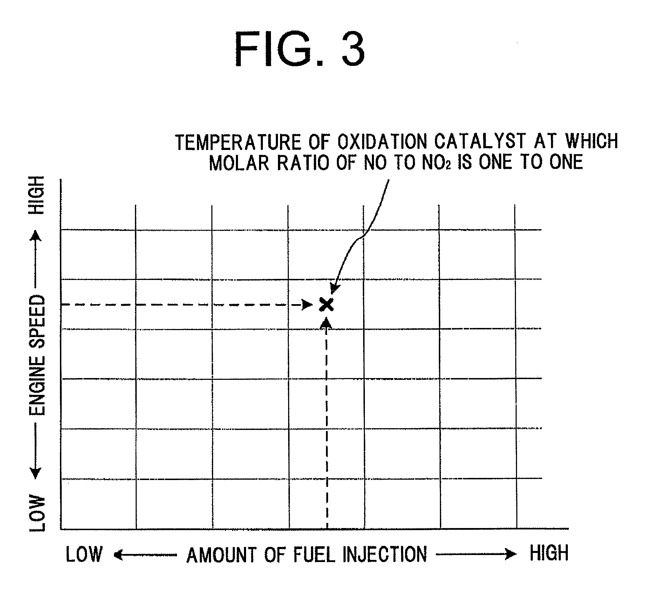

Specifically, the ECU 10 has a data map including data of experimentally obtained temperatures of the oxidation catalyst 3 associated with different respective amounts of fuel injections and engine speeds of the diesel engine 1, at which temperatures the molar ratio between NO and NO₂ in exhaust gas passed through the oxidation catalyst 3 and the DPF 4 is one to one, as shown in Fig. 3. During operation of the diesel engine 1, amounts of fuel injections and engine speeds of the diesel engine 1 are determined at a predetermined time interval, and a temperature of the oxidation catalyst 3 at which molar ratio between NO and NO₂ is one to one is figured out from the data map of Fig. 3. Accordingly, the ECU 10 controls the operation of the electric heater 8 so that the oxidation catalyst 3 is heated such that temperature then detected by the temperature sensor 9 becomes substantially the same as the temperature obtained from the data map of Fig. 3.

Referring back to Fig. 1, when exhaust gas adjusted such that molar ratio between NO and NO2 becomes one to one flows into the SCR catalyst 5, urea water supplied into the exhaust passage 2 from the urea water supply nozzle 7 at the upstream of the SCR catalyst 5 is hydrolyzed to form ammonia and nitrogen dioxides. Then, ammonia and NO_{X} in exhaust gas are reacted thereby to form nitrogen and water. The ammonia remaining in the SCR catalyst 5 without being reacted or consumed is oxidized in the oxidation catalyst 6. Thus, exhaust gas is purified and discharged into the atmosphere.

As described above, the exhaust gas purifying system according to the first preferred embodiment of the present invention may adjust the temperature of the oxidation catalyst 3 by controlling the electric heater 8 provided for the oxidation catalyst 3 such that the molar ratio between NO and NO2 in exhaust gas flowing into the SCR catalyst 5 becomes one to one, with the result that purification efficiency of the SCR catalyst 5 is maximized irrespective of the operating conditions of the diesel engine 1. PM in exhaust gas is removed therefrom by the DPF 4 disposed between the oxidation catalyst 3 and the SCR catalyst 5.

The following will describe an exhaust gas purifying system according to a second preferred embodiment of the present invention. The same reference numerals denote substantially similar components to those of Fig. 1, and the description thereof will be omitted.

The exhaust gas purifying system according to the second preferred embodiment has an additional electric heater 211 serving as a second heating mechanism disposed on the upstream end surface of the SCR catalyst 5 for heating the SCR catalyst 5 and an additional temperature sensor 212 arranged downstream of the SCR catalyst 5. In the second preferred embodiment, the temperature detected by the temperature sensor 212 is considered as the temperature of the SCR catalyst 5. The electric heater 211 and the temperature sensor 212 are electrically connected to an ECU 210 serving as a controller.

Generally, the temperature where the SCR catalyst 5 becomes most active is in the range from 200 to 500 °C. Accordingly, the ECU 210 controls the electric heater 211 such that the temperature detected by the temperature sensor 212 for the SCR catalyst 5 is in the range from 200 to 500 °C. Thus, the exhaust gas purifying system according to the second preferred embodiment is advantageous in that the time before sufficient purifying efficiency is obtained can be shortened by heating the SCR catalyst 5 by the electric heater 211, for example, at a cold start when the temperature of the SCR catalyst 5 is still low.

In the first and second preferred embodiments, the electric heater 8 may be coated on the surface thereof with a layer of oxidation catalyst 3 so that the oxidation catalyst 3 is supported by the electric heater 8, thus providing as an electrically heated catalyst (EHC). Similarly, in the second preferred embodiment, the electric heater 211 may also be coated on the surface thereof with a layer of SCR catalyst 5 so that the SCR catalyst 5 is supported by the electric heater 211. In such arrangements, the exhaust gas purifying system may be downsized.

In the first and second preferred embodiments, the DPF 4 may be omitted. In this case, the data map is made which includes data of experimentally obtained temperatures of the oxidation catalyst 3 for different respective amounts of fuel injections and engine speeds of the diesel engine 1, at which temperatures the molar ratio between NO and NO₂ in exhaust gas passed through the oxidation catalyst 3 is one to one.

An exhaust gas purifying system includes an exhaust passage, an oxidation catalyst, a selective catalytic reduction catalyst, a urea water supply device, a first heating mechanism and a controller. The exhaust gas discharged from an internal combustion engine flows through the exhaust passage. The oxidation catalyst for oxidizing nitrogen monoxide contained in the exhaust gas to nitrogen dioxide is disposed in the exhaust passage. The selective catalytic reduction catalyst is disposed downstream of the oxidation catalyst. The urea water supply device supplies urea water into the exhaust passage at the upstream of the selective catalytic reduction catalyst. The first heating mechanism heats the oxidation catalyst. The controller controls the first heating mechanism to adjust the temperature of the oxidation catalyst such that molar ratio between nitrogen monoxide and nitrogen dioxide in the exhaust gas flowing into the selective catalytic reduction catalyst become one to one.

## Claims

1. An exhaust gas purifying system comprising:
an exhaust passage (2) through which exhaust gas discharged from an internal combustion engine (1) flows;
an oxidation catalyst (3) for oxidizing nitrogen monoxide contained in the exhaust gas to nitrogen dioxide, wherein the oxidation catalyst (3) is disposed in the exhaust passage (2);
a selective catalytic reduction catalyst (5) disposed downstream of the oxidation catalyst (3);
a urea water supply device (7) supplying urea water into the exhaust passage (2) at the upstream of the selective catalytic reduction catalyst (5); and
a first heating mechanism (8) heating the oxidation catalyst (3),
**characterized in that** the exhaust gas purifying system further comprises a controller (10, 210) controlling the first heating mechanism (8) to adjust the temperature of the oxidation catalyst (3) such that molar ratio between nitrogen monoxide and nitrogen dioxide in the exhaust gas flowing into the selective catalytic reduction catalyst (5) becomes one to one.

2. The exhaust gas purifying system according to claim 1, **characterized in that** the oxidation catalyst (3) is supported by the first heating mechanism (8) in the exhaust passage (2).

3. The exhaust gas purifying system according to claim 1, **characterized in that** the first heating mechanism (8) is disposed upstream of the oxidation catalyst (3), and a temperature sensor (9) is disposed downstream of the oxidation catalyst (3), wherein the first heating mechanism (8) and the temperature sensor (9) are electrically connected to the controller (10, 210).

4. The exhaust gas purifying system according to any one of claims 1 through 3, **characterized in that** the controller (10, 210) controls the first heating mechanism (8) to adjust the temperature of the oxidation catalyst (3) based on an amount of fuel injection and engine speed of the internal combustion engine (1).

5. The exhaust gas purifying system according to claim 4, **characterized in that** the controller (10, 210) includes data of temperatures of the oxidation catalyst (3) associated with respective amounts of fuel injections and engine speeds of the internal combustion engine (1), wherein the controller (10, 210) figures out the temperature of the oxidation catalyst (3) at which the molar ratio between nitrogen monoxide and nitrogen dioxide is one to one from the data at a predetermined time interval.

6. The exhaust gas purifying system according to any one of claims 1 through 5, further comprising a second heating mechanism (211) heating the selective catalytic reduction catalyst (5).

7. The exhaust gas purifying system according to claim 6, **characterized in that** the selective catalytic reduction catalyst (5) is supported by the second heating mechanism (211) in the exhaust passage (2).

8. The exhaust gas purifying system according to claim 6 or 7, **characterized in that** the controller (210) controls the second heating mechanism (211) such that the temperature of the selective catalytic reduction catalyst (5) is in the predetermined range.

9. The exhaust gas purifying system according to claim 8, **characterized in that** the predetermined range is from 200 to 500 °C.

10. The exhaust gas purifying system according to any one of claims 1 through 9, further comprising a diesel particulate filter (4) disposed between the oxidation catalyst (3) and the selective catalytic reduction catalyst (5).
